# EUROPÄISCHE PATENTSCHRIFT

(11) **EP 2 361 675 B1**
(45) Veröffentlichungstag und Bekanntmachung des Hinweises auf die Patenterteilung: **10.04.2013**
(21) Anmeldenummer: 10015704.9
(22) Anmeldetag: 16.12.2010
(51) Int. Cl.: B01J 3/04, B01J 19/24

(54) **Reaktor für Reaktionen bei hohem Druck und hoher Temperatur und dessen Verwendung**
Reactor for reactions at high pressure and high temperature and use of same
Réacteur pour réactions à pression et température élevées et son utilisation

(30) Priorität: 26.02.2010 DE 102010009514
(43) Veröffentlichungstag der Anmeldung: 31.08.2011
(73) Patentinhaber: Karlsruher Institut für Technologie, 76131 Karlsruhe (DE)
(72) Erfinder: Boukis, Nikolaos, 76137 Karlsruhe (DE); Galla, Ulrich, 76689 Karlsdorf-Neuthard (DE)

(56) Entgegenhaltungen:
- FR-A1- 2 814 967
- US-A- 5 670 040
- US-A- 6 030 587

## Beschreibung

Die vorliegende Erfindung betrifft einen Reaktor zur Durchführung von Reaktionen bei welchen hohe Drücke und hohe Temperaturen notwendig sind, umfassend einen Hauptreaktor und einen beheizbaren Nachreaktor. Weiterhin betrifft die Erfindung die Verwendung eines solchen Reaktors für die hydrothermale Vergasung von Biomasse.

Reaktoranlagen, die bei Hochdruck und Hochtemperatur betrieben werden, stellen besondere Ansprüche an die verwendeten Reaktormaterialien. Zum einen muss eine hinreichende chemische Stabilität gegen Korrosion gegeben sein und gleichzeitig muss das Material eine gleichbleibende Druckstabilität gewährleisten, sodass selbst bei hohen Temperaturen die Materialdeformierung der drucktragenden Teile minimal sein soll.

Ein Beispiel für eine Hochdruckbehandlungsvorrichtung wird in DE 196 15 974 A1 beschrieben. Es handelt sich um eine Durchflussanlage mit spiralförmigen Rohrleitungen, die sequenziell beheizbar sind. Insbesondere ist diese Anlage dafür ausgelegt, hydrothermale Umsetzungen durchzuführen, bei welchen organische Moleküle in überkritischem Wasser zersetzt werden. Beispielhaft hier Temperaturbereiche von 250°C bis 400°C angegeben, ein Betreiben der Anlage mit Temperaturen bis zu 700°C wird nicht beschrieben.

Die hydrothermale Umsetzung in überkritischem Wasser ist besonders geeignet für die energetische Nutzung nasser Biomasse, die bei diesem Prozess zu Brenngasen umgesetzt wird. Hohe chemische und energetische Wirkungsgrade sowie eine gute Gasqualität und Zusammensetzung kennzeichnen das Verfahren. Dabei werden Drücke und Temperaturen höher als der kritische Punkt des Wassers angewandt. Ein Beispiel für ein Verfahren der Biomassevergasung in überkritischem Wasser wird in DE 102 10 178 Cl offenbart.

Im Allgemeinen bedeutet der kritische Punkt ein thermodynamischer Zustand eines Stoffes, der sich durch Angleichen der Dichten von flüssiger und Gasphase kennzeichnet. Da oberhalb des kritischen Punktes Flüssigkeit und Gas nicht mehr voneinander unterschieden werden können, spricht man stattdessen von einem überkritischen Fluid bzw., wie in der vorliegenden Erfindung verwendet, von überkritischem Wasser. Der kritische Punkt von Wasser stellt sich erst bei Drücken höher als 221 bar und Temperaturen höher 374°C ein.

Die chemischen Umsätze bei der hydrothermalen Biomassevergasung steigen mit der Reaktionstemperatur. Zumeist werden Temperaturen von ca. 600°C eingesetzt. Besonders reaktionsträge Biomassen benötigen aber Temperaturen von 700°C, um nahezu vollständige Umsätze zu erreichen. Bei niedrigeren Temperaturen ist der chemische Umsatz wesentlich geringer und erreicht beispielsweise bei 550°C nur ca. 50%.

Ein Problem, das bei Reaktoren für die hydrothermale Biomassevergasung in überkritischem Wasser auftritt, ist, wie oben bereits erwähnt, die Druckstabilität bzw. mechanische Belastbarkeit der Reaktoren bei hohen Temperaturen. Im Falle der hydrothermalen Biomassevergasung ist dies auch ein begrenzender Faktor, da bei konventionellen Reaktormaterialien bei Temperaturen über 600°C die mechanische Festigkeit abnimmt, was die Konstruktion einer Anlage erschwert und verteuert. Wünschenswert wäre allerdings eine vollständige Vergasung der Biomasse, wofür eine höhere Temperatur von ca. 700°C notwendig ist.

Die chemischen Umsätze bei der hydrothermalen Biomassevergasung steigen auch mit der mittleren Verweilzeit im Reaktor. Der maximale Umsatz wird, in Abhängigkeit von der Temperatur, in 0,5 bis 5 min erreicht. Alle die Reaktion beeinflussenden Größen, Temperatur, Druck und Verweilzeit, sind mit Kosten für die Reaktormaterialien verbunden.

Ein weiterer Kostenfaktor für die Reaktormaterialien ist die Korrosionsbeständigkeit. Unter überkritischen Bedingungen kann Wasser organische Substanzen relativ gut auflösen, jedoch fallen anorganische Substanzen, insbesondere Salze, aus der wässrigen Lösung aus. Diese Ablagerungen können an der Kontaktfläche zum Reaktorgehäuse zu erheblicher Korrosion der Reaktormaterialien beitragen. Besonders problematisch ist dieses Phänomen bei hohen Temperaturen, denn die Korrosion ist, wie die meisten chemischen Reaktionen, stark temperaturabhängig. Idealerweise sollten die Salze möglichst dann aus dem Reaktor entfernt worden sein, bevor die höchsten Reaktortemperaturen von über 700°C erreicht werden.

In DE 10 2007 011 369 A1 wird die Verwendung einer Legierung vorgeschlagen, die sich als besonders korrosionsbeständig bei der hydrothermalen Biomassevergasung in überkritischem Wasser auszeichnet. Jedoch gibt es auch hier die Problematik, dass das Material bei hohen Temperaturen eine geringere mechanische Festigkeit aufweist.

DE 202 20 307 U1 beschreibt einen Reaktor für die hydrothermale Biomassevergasung, welcher über eine Abscheidevorrichtung für ausgefällte Salze verfügt. Diese Vorrichtung befindet sich im unteren Teil des Reaktors, wo sich die Salzsolen mit relativ hoher Dichte sammeln. Diese werden regelmä-βig abgelassen, um sie aus dem Reaktor zu entfernen.

DE 10 2005 037 469 A1 offenbart eine Vorrichtung zur Abscheidung von anorganischen Feststoffen aus einer wässrigen Lösung. Diese Vorrichtung umfasst zusätzliche Abscheider, welche die Salze aus überkritischem Wasser entfernen, bevor der Reaktor mit der wässrigen Lösung beschickt wird.

Aus DE 10 2004 031 023 B4 wird ein Verfahren bekannt, bei welchem organische Edukte zu ölartigen Produkten reagieren. Das Verfahren wird in Wasser bei hohen Drücken und Temperaturen durchgeführt. Hierzu wird aus einem ersten Eduktstrom aus wasserlöslichen organischen Verbindungen und über einen ersten Reaktor bei 221 bar und 500°C bis 700°C ein wasserstoffhaltiges Gas hergestellt. Dieses Produkt wird mit einem zweiten Eduktstrom, der organische Materialien enthält, in einem zweiten Reaktor bei 221 bar und bei 200°C bis 450°C zu einem ölartigen Produkt umgesetzt. Die Reaktoren sind hier räumlich getrennt und die Eduktströme werden erst im zweiten Reaktor zusammengeführt.

Alle im Stand der Technik offenbarten Vorrichtungen stellen jedoch keine dauerhafte Lösung für die Problematik der Materialstabilität bei hohen Temperaturen dar. Diese Vorrichtungen sind für den Betrieb bei 700°C und hohen Drücken nur bedingt geeignet.

Ausgehend hiervon ist es die Aufgabe der Erfindung, einen Reaktor vorzustellen, der die genannten Probleme des Stands der Technik überwindet und dessen Verwendung anzugeben. Es bedarf eines Reaktortyps, der Reaktionsbedingungen bei hohen Temperaturen und Drücken standhält, ohne dass aufwendige Reaktormaterialien eingesetzt werden müssen. Dieser Reaktor soll beispielsweise gewährleisten, dass die organische Materie bei der hydrothermalen Vergasung möglichst vollständig umgesetzt wird. Dies bedeutet vor allem, dass Verweilzeit, Reaktortemperatur und Druck in den hierfür notwendigen Betriebsbedingungen dauerhaft eingehalten werden können.

Die Aufgabe wird durch den in Anspruch 1 beanspruchten Reaktor und die in Anspruch 4 beanspruchte Verwendung gelöst. Bevorzugte Ausführungsformen des Reaktors sind in den rückbezogenen Ansprüchen 2 und 3 beschrieben.

Der erfindungsgemäße Reaktor zur Durchführung von Reaktionen im Durchflussverfahren bei hohen Drücken und hohen Temperaturen umfasst im Wesentlichen zwei Reaktionsbehältnisse, den Hauptreaktor und den Nachreaktor. Beide Reaktoren sind in Serie angeordnet. Das bedeutet, dass das Prozessfluid zunächst den Hauptreaktor und anschließend den Nachreaktor durchströmt.

Der Nachreaktor befindet sich im Inneren des Hauptreaktors und kann über eine Zusatzheizung auf eine höhere Temperatur aufgeheizt werden, als die Reaktortemperatur des Hauptreaktors. Die Funktion des Nachreaktors besteht darin, einen thermisch weitgehend abgeschlossenen Bereich innerhalb des Hauptreaktors zu schaffen, der bei höherer Temperatur gefahren werden kann, ohne dass dieser Hochtemperaturbereich in Kontakt mit den drucktragenden Teilen des Hauptreaktors ist. Der Nachreaktor stellt also einen zusätzlichen von der Außenwandung des Hauptreaktors räumlich getrennten Reaktorraum dar, der es im Durchflussverfahren ermöglicht, den Produktstrom aufzunehmen und ihn mit höherer Temperatur zu beaufschlagen.

Konstruktionsbedingt hat das Prozessfluid beim durchströmen der beiden Reaktoreinheiten einen konstant hohen Druck. Die Druck tragenden Teile sind aber nur im Hauptreaktor befindlich, da der Nachreaktor in dessen Inneren angeordnet ist. Das maßgeblich Druck tragende Teil ist in erster Linie die Außenwandung des Hauptreaktors. Um diese Wandung gegen die hohen Temperaturen des Nachreaktors anzuschirmen, wird die Außenwandung des Hauptreaktors in einer bevorzugten Ausführung gegen den Bereich des Nachreaktors räumlich abgetrennt, der mit höherer Temperatur beaufschlagbar ist.

Besonders bevorzugt ist eine Prozessstromführung dergestalt, dass das Prozessfluid im Hauptreaktor den Zwischenraum im Hauptreaktor durchströmt, der die räumliche Trennung zum Nachreaktor darstellt. Das Prozessfluid im Hauptreaktor stellt somit faktisch das Isoliermaterial gegen den Hochtemperaturbereich im Nachreaktor dar. Der Nachreaktor selbst hat keine Druck tragenden Teile und kann daher relativ dünnwandig und mit preiswerten, korrosions- und hitzebeständigen Materialien ausgeführt werden. In dieser Anordnung können Hochdruckreaktionen bei wesentlich höheren Temperaturen gefahren werden.

Beispiele für elektrische Zusatzheizungen sind aus dem Stand der Technik bekannt. Bevorzugter Weise können z.B. Induktionsheizungen eingesetzt werden.

Die Erfindung betrifft weiterhin die Verwendung eines erfindungsgemäßen Reaktors für die Durchführung einer hydrothermalen Vergasungsreaktion von Biomasse in überkritischem Wasser im Durchflussverfahren.

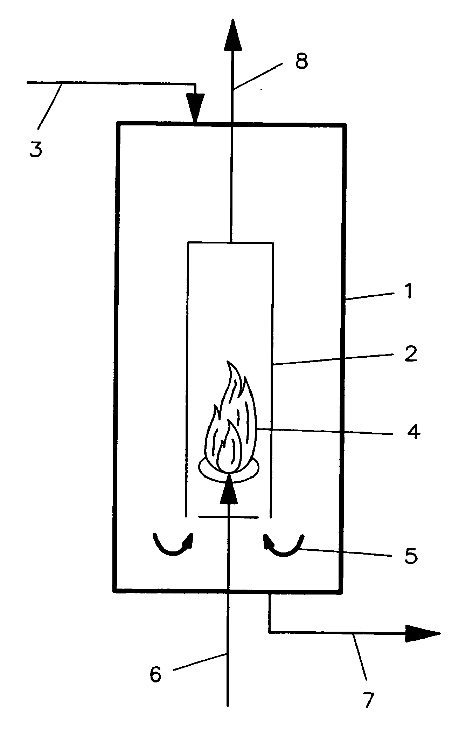

Die Erfindung wird im Folgenden anhand der **Fig. 1** erläutert.

**Fig. 1** Schematische Darstellung eines erfindungsgemäßen Reaktors für die hydrothermale Biomassevergasung.

Wie in **Fig. 1** schematisch dargestellt, umfasst der Reaktor eine äußere Reaktorwand, die gleichzeitig das Gehäuse des Hauptreaktors **1** darstellt. Diese Reaktorwand ist das wesentliche Druck tragende Teil, das vor zu hohen Temperaturen geschützt werden muss. Dies wird erreicht, indem als Hauptreaktor **1** ein hochdruck- und hochtemperaturbeständiges zylinderförmiges Gefäß mit zwei Anschlüssen **(3, 7)** eingesetzt wird. Ein dünnwandiger zylindrischer Behälter wird als Nachreaktor **2** in den Hauptreaktor **1** eingebracht. Die Kontaktflächen zwischen Nachreaktor **2** und Hauptreaktor **1** sind hierbei auf ein Minimum reduziert. Der Nachreaktor **2** wird aus einer Metalllegierung oder aus einem keramischen Werkstoff hergestellt und ist mit zwei Öffnungen ausgestattet.
Der Zulauf an Prozessfluid **3,** das bereits auf die im Hauptreaktor **1** gewünschten Reaktionsbedingungen erhitzt und komprimiert wurde, geschieht hier über die oberen Zulauf **3** in den Hauptreaktor **1,** in welchem ein Teil der Reaktionsprozesse abläuft. Das Prozessfluid strömt von oben nach unten entlang des Nachreaktors **2,** wobei das Prozessfluid die Außenwandung des Hauptreaktors **1** gegen die hohen Temperaturen im Nachreaktor **2** abschirmt. Im unteren Teil des Hauptreaktors **1** wird die Strömungsrichtung des Prozessfluids **5** umgelenkt, um in den Nachreaktor **2** zu gelangen. Gleichzeitung kann am tiefsten Punkt des Reaktors evtl. ausgefallene Salzsolen über den Salzabscheider **7** abgetrennt werden. Sobald das Prozessfluid in den Nachreaktor **2** gelangt ist, wird über eine Zufuhrleitung **6** ein Reaktand, beispielsweise Sauerstoff oder Luft, hinzugefügt, welcher zu einer Teilverbrennung bereits entstandener Produktgase führt. Diese kontrollierte Teilverbrennung bewirkt in diesem Beispiel die Zusatzbeheizung **4** des Nachreaktors **2,** mit welcher die Temperatur des Prozessfluids im Nachreaktor **2** auf bis zu 800°C erhöht wird, um eine vollständige Umsetzung der Biomasse zu erreichen. Erfindungsgemäß kommt jedoch eine elektrische Zusatzheizung **4** zum Einsatz .
Im vorliegenden Beispiel ist der Nachreaktor **2** in Form einer Steigleitung ausgebildet, welche am oberen Ende einen Produktauslass **8** umfasst. Die Strömungsrichtung im Nachreaktor **2** ist also gegenströmig zum Hauptreaktor **1,** somit kann das Prozessfluid im Nachreaktor **2** einen Teil seiner Wärme wieder abgeben, um an der oberen Kontaktfläche mit dem Hauptreaktor **1** wieder auf niedrigere Temperaturen zu gelangen. Eventuell kann eine zusätzliche Kühlvorrichtung (Luftkühler) an der Stelle des Produktauslasses **8** platziert werden, damit Druck tragenden Teile auf zulässige Temperaturwerte gebracht werden.

### Bezugszeichenliste

- 1: Hauptreaktor
- 2: Nachreaktor
- 3: Zulauf des Prozessfluids
- 4: Zusatzheizung
- 5: Strömungsrichtung des Prozessfluids
- 6: Zufuhr des Reaktanden
- 7: Salzabscheider
- 8: Produktauslass

## Patentansprüche

1. Reaktor zur Durchführung von Reaktionen im Durchflussverfahren bei hohen Drücken und hohen Temperaturen umfassend einen Hauptreaktor **(1)** und einen Nachreaktor **(2)** derart angeordnet, dass ein Prozessfluid den Hauptreaktor **(1)** und anschließend den Nachreaktor **(2)** durchströmt, wobei ein Bereich des Nachreaktors **(2)** mit einer höheren Temperatur beaufschlagbar ist als der Hauptreaktor **(1),** und der Nachreaktor **(2)** im Inneren des Hauptreaktors **(1)** angeordnet ist und wobei der Nachreaktor eine elektrische Heizung umfasst.

2. Reaktor nach einem der vorgenannten Ansprüche, **dadurch gekennzeichnet, dass** die Außenwandung des Hauptreaktors **(1)** eine räumliche Trennung gegen den Bereich des Nachreaktors **(2)** aufweist, der mit höherer Temperatur beaufschlagbar ist.

3. Reaktor nach Anspruch 2, wobei die Außenwandung des Hauptreaktors **(1)** gegen die höhere Temperatur des Nachreaktors **(2)** durch das die räumliche Trennung im Hauptreaktor **(1)** durchströmende Prozessfluid abgeschirmt ist.

4. Verwendung eines Reaktors nach den Ansprüchen 1 bis 3 für eine hydrothermale Vergasung von Biomasse in überkritischem Wasser.

## Claims

1. Reactor for carrying out reactions in the continuous flow process at high pressures and high temperatures, comprising a main reactor (1) and a secondary reactor (2) arranged such that a process fluid flows through the main reactor (1) and then the secondary reactor (2), wherein a higher temperature can be applied to a region of the secondary reactor (2) than to the main reactor (1), and the secondary reactor (2) is arranged in the interior of the main reactor (1), and wherein the secondary reactor comprises an electric heater.

2. Reactor according to the preceding claim, **characterised in that** the outer wall of the main reactor (1) has a spatial separation from the region of the secondary reactor (2) to which a higher temperature can be applied.

3. Reactor according to claim 2, wherein the outer wall of the main reactor (1) is shielded from the higher temperature of the secondary reactor (2) by the process fluid flowing through the spatial separation in the main reactor (1).

4. Use of a reactor according to claims 1 to 3 for a hydrothermal gasification of biomass in supercritical water.

## Revendications

1. Réacteur pour la mise en oeuvre de réactions par le procédé d'écoulement à pressions et températures élevées comportant un réacteur principal (1) et un réacteur de post-traitement (2) montés de sorte que le fluide de process s'écoule dans le réacteur principal (1) puis dans le réacteur de post-traitement (2), une zone du réacteur de post-traitement (2) pouvant être à une température plus élevée que le réacteur principal (1), le réacteur de post-traitement (2) étant monté à l'intérieur du réacteur principal (1), et le réacteur de post-traitement comprenant un chauffage électrique.

2. Réacteur conforme à la revendication 1,
**caractérisé en ce que**
la paroi externe du réacteur principal (1) est spacialement séparée de la zone du réacteur de post-traitement (2) qui peut être à une température plus élevée.

3. Réacteur conforme à la revendication 2, dans lequel la paroi externe du réacteur principal (1) est protégée contre la température plus élevée du réacteur de post-traitement (2) par le fluide de process s'écoulant au travers de la séparation spaciale dans le réacteur principal (1).

4. Utilisation d'un réacteur conforme aux revendications 1 à 3, pour la vaporisation hydrothermale de biomasses dans de l'eau sur-critique.
